# EUROPEAN PATENT SPECIFICATION

(11) **EP 2 634 042 B1**
(45) Date of publication and mention of the grant of the patent: **16.04.2014**
(21) Application number: 12157534.4
(22) Date of filing: 29.02.2012
(51) Int. Cl.: B60P 1/00

(54) **End-dump discharging device for a receptable**
Endabladevorrichtung für ein Behältnis
Dispositif de décharge à benne basculante destiné à un réceptacle

(43) Date of publication of application: 04.09.2013
(73) Proprietor: Hydraulic Ram Trailer bvba, 3210 Lubbeek (BE)
(72) Inventor: Deltomme, Marc, 1600 Sint-Pieters-Leeuw (BE)
(74) Representative: Brants, Johan P.E.

(56) References cited:
- WO-A2-99/15357
- DE-A1-102005 029 914
- DE-U1- 20 117 346
- FR-A1- 2 823 492
- US-B1- 7 980 805

## Description

### TECHNICAL FIELD

The invention pertains to the technical field of receptacles such as containers, trailers, semi-trailers, trucks, dumpers, etc. for storing or transporting solids as cargo comprising an end-dump discharging device for unloading the cargo. More in particular, the present invention concerns a receptacle with a discharge device for pushing the cargo out of back of the receptacle.

### BACKGROUND

Dump trucks are used in earth moving operations to move material, such as dirt and rock, from one point to another. Conventional dump type trucks dump material by elevating a receptacle of a work machine with hydraulic cylinders. The force of gravity causes the material to be dumped out of the rear of the receptacle. End-dump trucks comprising receptacles with a tilting device for tilting the front of the receptacle and thereby dumping the cargo at the back end, are well known in the art. Such receptacles, however, have a number of risks and shortcomings. For instance, the receptacle needs to be firmly in an essentially horizontal position before the tilting device can be actuated. If it is not horizontal, the receptacle may fall towards the side when it is being lifted. This can also happen due to other circumstances, e.g. when there is a heavy wind or other difficult weather conditions, when the underground is not stable enough (e.g. loose sand), etc. Tilting the receptacle is also time-consuming, whereby it may typically take over 2 minutes to empty a full receptacle, and another 1.5 minutes to lower the receptacle. Moreover, the receptacle must be moved forwards during the discharging process, as cargo which has been dumped first by e.g. the tipper truck may prevent the rest of the cargo to slide or fall out. It is clear that this constitutes an increased risk of causing accidents. Further, if the receptacle is tilted, an increased weight is to be supported on the rear support, such as the rear axis, which could lead to breakage. It is also possible that something prohibits the use of a tiltable receptacle, such as a bridge or electricity cables overhead, and the tiltable receptacle may not be able to unload its cargo in a tunnel or inside a hangar. Moreover, a hydraulic arm may always bend or break. It is clear that if something goes wrong with a tiltable end-dump receptacle, there is a high risk of large damages to material and, more importantly, of causing lethal injuries to operators and passersby. Also during maintenance of or reparations to the hydraulic cylinder, the receptacle is necessarily in a tilted position, and accidents occur all too frequently. In Belgium alone, about one accident per day occurs with tipper trucks due to one of the abovementioned hazards. Any end-dump receptacle which is capable of dumping the cargo without tilting may overcome these, often dangerous, shortcomings.

One way to overcome the necessity of tilting is to use a discharge device for pushing out the cargo through the back. Such a system is much safer as it has a much lower risk of tipping over. Also, if the actuator is not powerful enough or breaks down, the cargo or receptacle remains stable. This is clearly not the case with a tiltable end-dump receptacle whereby a bending or breaking hydraulic arm may cause large damages. Trailers or containers comprising a discharging device comprising a movable front section which can be pushed backwards by a hydraulic arm are known in the prior art. An example is given in document US 6,155,776 which discloses a method of controlling movement of an ejector plate and a tailgate which are operatively associated with a receptacle of a work machine. The method includes the step of supplying pressurized fluid via a first fluid line to (i) a first intake port of a multi-stage cylinder, and (ii) a second intake port of a single-stage cylinder. The method further includes the step of moving the ejector plate a first distance with the multi-stage hydraulic cylinder between from a retracted position toward an extended position in response to the supplying step. The method yet further includes the step of preventing movement of the tailgate during the ejector plate first distance moving step. The method still further includes the step of moving the ejector plate a second distance with the multi-stage hydraulic cylinder toward the extended position in response to the supplying step. The ejector plate second distance moving step is performed after the ejector plate first distance moving step. The method yet further includes the step of moving the tailgate with the single-stage hydraulic cylinder between a closed position and an open position after the ejector plate first distance moving step is performed. A control assembly for a multistage cylinder is also disclosed. However, a hydraulic arm or cylinder can be expensive and heavy. Further, it is limited in size or range as it is not to bend under its own weight or under the weight of the application of a force which is needed to push out the cargo. It also needs space in the front since a retracted telescopic cylinder always has a minimal length. Typically, this minimal length depends on the length of the receptacle and may become large when the receptacle is long. The space taken up by the retracted cylinder is lost for the cargo and/or results in a longer truck which is more difficult to handle. A further, commonly occurring problem with hydraulic cylinders is that they may bend upon application of a large force. Another shortcoming is that the presence of a hydraulic cylinder may change the weight distribution of the receptacle. When the receptacle is transported on the road, the weight is preferably distributed evenly over all axes of the transport vehicle. As the space necessary for the compact hydraulic cylinder, e.g. at the front of the receptacle, cannot be used to store the cargo, the weight of the cargo will have to be supported by the rear axis or axes, which are thus more heavily loaded than the front axis or axes.

German patent DE 1 149 301 discloses a discharge device for a container for solids, in particular for a garbage container whereby a lengthwise-movable blade is arranged in the interior of the container, whereby pinions are mounted on the blade and grip into racks which lie along the container walls, the pinions being driven by movement means, e.g. a hydraulic engine, arranged on a pinion-connecting shaft. However, the racks of the container as disclosed in DE 1 149 301 may become dirty and may thereby damage a pinion or the discharging device unless longitudinally arranged side blades are provided which protect the racks from the garbage in the container. Such side blades can be a heavy and expensive solution to the problem of keeping the racks clean and thereby functional. The device of DE 1 149 301 is particularly suited to discharge garbage, which is typically light and which typically consists of large pieces and chunks. It is not suited for dirt, sand, cement, construction waste, etc. which consists of small grains or objects which may easily penetrate to the rack and pinion, even when longitudinally arranged side blades are provided, thereby disturbing the optimal functioning of the discharging device. Furthermore, screening the rack and pinion by such side blades results in the creation of a compartment which cannot be used for storing cargo.

German patent application DE 10 2005 029914 discloses a transport vehicle for transporting material, e.g. waste or crops, which has a load space, an emptying opening and a shield movable though the load space by a drive motor attached to a carriage that can move through the load space. The carriage and/or the shield can be locked in different positions in the lad space. The drive motor is a hydraulic cylinder with which the position of either the shield or carriage can be altered depending on the locking state of the shield or carriage. The shield has a drive arrangement that affects only a small part of the available load space and enables rapid emptying of the load space.

French patent application FR 2 823 492 discloses a compactor for waste which has a horizontal compacting discharge press with a thin high strength steel sheet press plate which is used with a rail transportable container. It has a cylindrical casing resting on a welded frame and the press plate is actuated by a double acting hydraulic cylinder operating along the casing. The casing has a loading hatch and a rear door for horizontal discharge. The application provides for a lightweight construction for portability of waste with a large capacity.

There remains a need in the art for an improved receptacle comprising a discharge device, which is cheaper, more reliable, more compact, lighter and stronger than prior art receptacles and/or discharge devices comprising e.g. a hydraulic cylinder. Furthermore, there remains a need in the art for an improved receptacle comprising a discharge device for which the cargo which may consist of small-sized grains or objects, does not interrupt of disturbs the optimal functioning of the discharge device and/or for which the space which can be used to store cargo, is maximized, thereby preferably limiting the tare weight of the receptacle as much as possible.

The present invention aims to resolve at least some of the problems mentioned above. The invention thereto aims to provide a receptacle for storing and transporting solids, comprising a discharge device for unloading said solids, whereby the cargo space is optimized and whereby the disturbance of the stored or transported solids on the functioning of the discharge device is minimized. The present invention also provides a discharge device for such a receptacle. The discharge device is capable of pushing out the cargo through the back of the receptacle in a secured, controlled, power efficient, and fast manner.

### SUMMARY OF THE INVENTION

The present invention provides a receptacle for storing and transporting solids, comprising a left receptacle wall, a right receptacles wall and a movable front section, all three of which comprise a top part, a middle part and a bottom part, said receptacle comprising a discharge device for unloading said solids by pushing out the solids through a back end of said receptacle, thereby increasing operator's and bystander's safety and/or reducing the receptacle's tare weight, whereby said discharge device comprises at least one engagement means, at least one gripping means and at least one actuating system, whereby said engagement means are mounted lengthwise along said left and/or right receptacle wall inside said receptacle, whereby said gripping means are mounted on an outer side of said front section and grip into said engagement means, whereby said actuating system is connected to said gripping means and capable of actuating said gripping means, thereby moving said front section lengthwise along the receptacle, characterized in that said middle part of said receptacle walls comprises a lengthwise engagement recess comprising an overhanging part, said engagement means attached to the middle part of said left and/or right receptacle wall to or below said overhanging part of said engagement recess.

In a second aspect, the present invention provides a discharge device suitable for a receptacle as described in this document.

In a further aspect, the present invention provides a system comprising a receptacle as described in this document and a towing vehicle for transporting said receptacle

In a further aspect, the present invention provides a system comprising a receptacle as described in this document and a hydraulic actuator attached to said receptacle for actuating said gripping means.

### DESCRIPTION OF FIGURES

**Figure 1** shows a transverse cross section of a receptacle according to an embodiment of the present invention.
**Figures 2 and 3** show two embodiments of engagement means and gripping means.
**Figure 4** shows a frontal view of the movable front section of a receptacle according to the present invention.
**Figure 5** shows a frontal view and a longitudinal cross-sectional view of the front section and of the receptacle according to an embodiment of the present invention.
**Figures 6a and 6b** show a self-supporting receptacle comprising a set of axles and wheels and connected to a towing vehicle.
**Figures 7a-7e** illustrate an embodiment of a receptacle according to the present invention.
**Figure 8** shows cross sectional views of a number of embodiments of a receptacle according to the present invention.

### DETAILED DESCRIPTION OF THE INVENTION

The present invention concerns a receptacle, such as a container, a trailer, a semi-trailer, a truck, a dumper, etc. for storing and transporting solids, comprising a discharge device for unloading said solids, whereby cargo space is optimized and whereby the disturbance of the stored or transported solids on the functioning of the discharge device is minimized. The present invention also concerns a discharge device for such a receptacle and a cargo transporting system comprising such a receptacle.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

The terms "top", "bottom", "front", "back", "left", "right", refer to the sides with respect to a receptacle such as a container or trailer meant for transport, i.e. "top" and "bottom" refer to the upper and lower side respectively, "front" refers to the side in the direction of the intended transport, e.g. the side where a towing vehicle is to be attached to the receptacle in order to transport it, while "back" refers to the opposite side, "left" and "right" refer to the sides of the container when seen from back to front.

The terms "vertical", "horizontal", "longitudinal" and "slanted" refer to directions with respect to a receptacle such as a container or trailer meant for transport and placed on a level floor, i.e. "vertical" refers to the direction perpendicular to the level floor, "horizontal" refers to any direction parallel to the level floor, "slanted" refers to a direction which neither vertical nor horizontal, "longitudinal" refers to a horizontal back-to-front direction. The term "below" as used in this document, refers to the space underneath a certain object or component with respect to the vertical direction. The term "overhanging part" as used in this document is used to indicate the presence of a space within the receptacle which is located below the part.

The term "drum", here and throughout this description unless otherwise defined, refers to a hollow, essentially cylindrical, component which may be open, partially open or closed to one or more sides.

In a first aspect, the invention provides a receptacle, such as a container, a trailer, a semi-trailer, a truck, a dumper, etc. for storing and transporting solids such as dirt, cement, concrete, rubble, chippings, construction waste or garbage, comprising a left receptacle wall, a right receptacle wall and a movable front section, all three of which comprise a top part, a middle part and a bottom part, said receptacle comprising a discharge device for unloading said solids, which comprises at least one engagement means, at least one gripping means and at least one actuating system, whereby said engagement means are mounted lengthwise along said left and/or right receptacle wall inside said receptacle, whereby said gripping means are mounted on an outer side of said front section and grip into said engagement means, whereby said actuating system is connected to said gripping means and capable of actuating said gripping means, thereby moving said front section lengthwise along the receptacle, characterized in that said middle part of said receptacle walls comprises a lengthwise engagement recess comprising an overhanging part, said engagement means attached to the middle part of said left and/or right receptacle wall to or below said overhanging part of said engagement recess. The engagement recess serves to keep the engagement means clean without the necessity of introducing lengthwise side blades for protecting the engagement means such as in DE 1 149 201. The overhanging part of the engagement recess prevents dirt from lying or falling on the engagement means. The discharge device unloads the solids by pushing these out through a back end of said receptacle, thereby increasing operator's and bystander's safety and/or reducing the receptacle's tare weight.

The receptacle of the present invention is better than push-out receptacles with a hydraulic cylinder as the force which is necessary to push the front section backwards is applied on the receptacle walls via the engagement means and not on an external part such as a chassis, via the hydraulic cylinder. Therefore a chassis is not necessary in the present invention, which reduces the tare weight of the receptacle. For a typical receptacle, e.g. of a truck, the tare weight is reduced by 1500 kg, which implies that 1500 kg more freight can be taken per trip, thereby significantly reducing the fuel consumption per trip or the number of trips for large freights. Further, the hydraulic cylinder which is expensive, which can bend easily, which takes up a lot of space in the front, which is heavy and which consumes a lot of power when used, is not necessary in the present invention. The receptacle of the present invention comprises gripping means with an actuating system which can be kept cheap, small, strong, light, and power efficient, in particular when compared to a hydraulic cylinder. Furthermore, the receptacle of the present invention can be made longer than a receptacle with a hydraulic cylinder for moving the front section, as it is very difficult and expensive to make a hydraulic cylinder, e.g. a telescopic hydraulic cylinder, which is long but does not bend under its own weight or under the application of the force necessary to push a cargo out of the receptacle.

In a preferred embodiment, said discharge device comprises at least two engagement means and two gripping means, whereby at least one left engagement means is mounted lengthwise along said left receptacle wall inside said receptacle and at least one right engagement means is mounted lengthwise along said right receptacle wall inside said receptacle, whereby at least one gripping means grips into said left engagement means and at least one gripping means grips into said right engagement means. In such a setup, the forces which are necessary to push the front section towards the back, thereby pushing the cargo out of the back of the receptacle, are more evenly distributed on the front section.

In a preferred embodiment, said overhanging part is slanted, i.e. said overhanging part is not oriented horizontally. More preferably, said overhanging part makes an angle with the horizontal direction which is larger than or equal to 1°, more preferably larger than 5°, even more preferably larger than 10°, still more preferably larger than 15°, yet more preferably larger than 20°, yet even more preferably larger than 25°, and which is smaller than or equal to 89°, more preferably smaller than 85°, even more preferably smaller than 80°, still more preferably smaller than 75°, yet more preferably smaller than 70°, yet even more preferably smaller than 65°, yet still more preferably smaller than 60°, most preferably said angle is between 30° and 50°, e.g. 30°, 31°, 32°, 33°, 34°, 35°, 36°, 37°, 38°, 39°, 40°, 41°, 42°, 43°, 44°, 45°, 46°, 47°, 48°, 49°, 50°.

Further, according to the present invention said engagement means are, preferably rigidly, attached to said slanted overhanging part. In this way, possible dirt or cargo remains may fall off easier from said engagement means, which contributes to the better functioning of the engagement means.

Further said middle part of said receptacle left and/or right wall comprises a portion below said overhanging part, said portion preferably comprising a slanted or vertical middle section. In a more preferred embodiment, said engagement means are rigidly attached to said slanted or vertical middle section below said overhanging part to prevent dirt or cargo remains from lying on or in between said engagement means, thereby disrupting the functioning of the engagement means.

In a preferred embodiment, said engagement means comprise a set of cylinders and/or drums, comprising an essentially circular cross section and a, preferably straight, mantle surface, which are attached to the overhanging part of said engagement recess or to said slanted or vertical middle section, said cylinders or drums preferably attached in a regular, lengthwise lined-up pattern along said receptacle, said cylinders or drums attached preferably such that said mantle surface is oriented essentially perpendicular to said overhanging part of said engagement recess or to said slanted or vertical middle section. Preferably said cylinders are rigidly attached and/or said drums are rotatably attached to said overhanging part of said engagement recess or to said slanted or vertical middle section. Preferably the cylinders or drums are attached with a side to the middle part of the left and/or right receptacle wall, such that solids may fall off the cylinders or drums. In a more preferred embodiment, said gripping means comprise a gear or pinion which grips into said set of cylinders or drums from below or above, preferably slanted from below or above, such that it may push solids, e.g. remains of cargo which has been pushed out, out from between said cylinders or drums, preferably when the front section is being pulled back to the front after delivering its cargo.

In another preferred embodiment, said engagement means comprise a chain rigidly attached to the overhanging part of said engagement recess or to said slanted or vertical middle section. Preferably the chain is attached with its side to the middle part of the left and/or right receptacle wall, such that solids may fall off the chain or fall through the openings of the chain. In a more preferred embodiment, said gripping means comprise a gear or pinion which grips into said chain from below or above, preferably slanted from below or above, such that it may push solids, e.g. remains of cargo which has been pushed out, out of the openings in the chain, preferably when the front section is being pulled back to the front after delivering its cargo.

In yet another preferred embodiment, said engagement means comprise a rack rigidly attached to the overhanging part of said engagement recess or to said slanted or vertical middle section. Preferably the rack is attached with its back to the middle part of the left and/or right receptacle wall, such that solids may fall off the rack or fall from between teeth of said rack. In a more preferred embodiment, said gripping means comprise a gear or pinion which grips into said rack, preferably slanted from above or below.

In a preferred embodiment, the receptacle is completely or partially self-supporting, hereby reducing the total weight of the receptacle with regards to a receptacle comprising a supporting chassis. Such a chassis is necessary for each kind of tiltable receptacle, such as present on a tipper truck, as they need support points at the front for the tilting mechanism and at the back where the receptacle hinges on the chassis. For a typical receptacle, e.g. of a truck, the tare weight can reduced by 1000-2000 kg, which implies that 1000-2000 kg more freight can be taken per trip, thereby significantly reducing the fuel consumption per trip or the number of trips for large freights.

In a preferred embodiment, the receptacle comprises a shape which increases self-supporting properties of said receptacle.

In a preferred embodiment, the bottom part of said receptacle comprises a cross section which comprises a, preferably hollow, curved shape, such as a parabola, a circle arc, a hyperbolic cosine or similar, for strengthening the receptacle and/or for increasing the self-supporting properties of said receptacle.

In a preferred embodiment, the bottom part, middle part and/or top part of said receptacle left and/or right wall comprises a strengthening section, which is preferably attached along the lengthwise and/or transverse direction. In a more preferred embodiment, said strengthening section comprises a metal component such as a rail, a bar or a profiled plate of iron or steel, preferably attached to the receptacle in a lengthwise direction or said strengthening section comprises overlapping plates.

In a preferred embodiment, said receptacle comprises a guiding protrusion and/or recess for supporting and guiding the front section along the lengthwise direction, thereby unburdening the gripping means at least partly from the weight of the front section, thereby guiding the front section along the lengthwise direction and thereby providing stability to said front section, i.e. preventing said front section from rotating around a horizontal transverse axis. Said guiding protrusions and/or recesses thus also help to keep the front section in an essentially vertical direction while unloading the cargo by restraining the front section from tipping or rotating around an essentially transverse horizontal axis. In a more preferred embodiment, said receptacle comprises at least two guiding protrusions and/or recesses, whereby the left and the right receptacle wall each comprise at least one guiding protrusion and/or recess. In a more preferred embodiment, the top part of the receptacle comprises said guiding protrusion and/or recess for providing stability to the front section.

In a preferred embodiment, said gripping means comprise a gear or pinion, preferably the teeth of said gear comprise an involute or cycloid profile. Preferably said pinion or gear is mounted on a pivot axis, which is connected to an actuator capable of rotating said pivot axis with said pinion or gear. Preferably said actuator is a hydraulic motor.

In a preferred embodiment, said front section comprises a curved shape for more efficiently unloading the cargo.

In a preferred embodiment, said bottom part of said front section is curved towards the inside of the receptacle for better scraping out the cargo when is pushed to the back, i.e. for providing a shoveling effect.

In a preferred embodiment, said top part of said front section is curved towards the inside of the receptacle for ensuring that no cargo is spilt over the top of the front section and/or the left or right receptacle walls.

In a preferred embodiment, the front section comprises a shape which is curved towards the inside of the receptacle near the left and/or right receptacle wall for better distributing the forces induced on said front section by said gripping means and/or said cargo when pushing a cargo towards the back of the receptacle.

In a preferred embodiment, said receptacle comprises a slit between said front section and said left and/or right receptacle walls and/or bottom and/or top, whereby said slit is less than 30mm wide, more preferably less than 25mm wide, even more preferably less than 20mm wide, but more than 1mm wide, preferably more than 5mm wide, even more preferably more than 10 mm wide, most preferably said slit is about 15mm wide.

In a preferred embodiment, said front section comprises closing means, such as strips, preferably rubber or elastic strips, attached to the edges of the front section for closing a slit between the front section and the left and/or right receptacle walls and/or bottom and/or top of said receptacle.

In a preferred embodiment said receptacle comprises an open top, a closed top or a partially open or closed top. An open or partially open or closed top allow easy loading of the cargo into the cargo space of the receptacle via the top or via the opening at the top. The receptacle may preferably comprise a closed top, preferably provided with one or more sealable openings. Such receptacle provides a closed-off cargo space, which can be necessary or at least useful for transporting specific solids for which a complete containment is appropriate, such as sewer waste, contaminated soil, dredging waste, solids which smell bad and/or which are bad for the environment, etc.

In a preferred embodiment, said receptacle comprises a front shield for at least partially closing off the receptacle at the front for preventing possible losses of cargo through possible slits between front section and walls. Said front shield also has improves the aerodynamical profile of said receptacle such that less fuel is necessary for transporting said receptacle, preferably during road transport.

In a preferred embodiment, said receptacle comprises one or more hydraulic motors attached to said front section and operably attached to said gripping means for actuating said gripping means, thereby capable of moving said front section in a lengthwise direction.

In a preferred embodiment, said receptacle comprises two gripping means, preferably whereby one gripping means grips into engagement means attached to the middle part of the left receptacle wall and one gripping means grips into engagement means attached to the middle part of the right receptacle wall, and whereby said receptacle comprises two hydraulic motors which are mounted on said front section and whereby each of said hydraulic motors is operably connected to a gripping means. By providing a hydraulic motor for each gripping means, the forces or torques which are needed to push the front section towards the back of the receptacle, can be separately controlled, and the total force which can be applied on the front section can be increased. Furthermore, according to the present invention the receptacle comprises engagement means attached to a slanted portion or section of the receptacle walls, the gripping means are mounted on the front section in a slanted direction. E.g. when said two gripping means each comprise a gear or pinion on a pivot axis connected to a hydraulic motor, said pivot axis may be oriented along a slanted direction. In such a case, the pivot axes of the two gripping means may not be oriented in the same direction and either two hydraulic motors are required or a transmission box for applying torque on said two slanted pivot axes has to be introduced between a hydraulic motor and said two pivot axes.

The types of hydraulic motor in a receptacle of the present invention may be any or any combination in the list of a gear-and-vane motor, a gerotor motor, an axial plunger motor, a radial piston motor, or another type of hydraulic motor.

In a preferred embodiment, said receptacle comprises a hydraulic actuator, such as a hydraulic pump connected to a power source such as an engine of a truck or tractor. In a more preferred embodiment, said actuator may be placed near a power source such as an engine of the truck, and said actuator is capable of transferring power, preferably by means of a high pressurized fluid, to the gripping means by a power transferring system such as preferably flexible hydraulic tubes. Preferably, the power transferring system is large or long enough to bridge the distance between actuator and gripping means, typically over a distance near the length of the receptacle, e.g. more than 1, 2, 3, 4, 5, 6, 7, 8, 9, 10, 11, 12, 13, 14, 15 meters. If the power transferring comprises flexible components, such as flexible hydraulic tubes, these components can be kept in compact state, e.g. rolled up, when the front section is near the front end of the receptacle, and these components can be lengthened according to the position of the front section, e.g. during the unloading of the cargo. Therefore, in a preferred embodiment, said receptacle comprises a rotatable drum capable of storing said flexible hydraulic tubes in a rolled-up state.

In a preferred embodiment, said receptacle comprises a hydraulic distributer or manifold and hydraulic tubes connected between said hydraulic distributer or manifold and said hydraulic motors for distributing pressurized fluid to the hydraulic motors mounted on the front section. Preferably said hydraulic distributer or manifold is capable of being connected by a tube to a hydraulic actuator such as a hydraulic pump. Preferably said hydraulic distributer or manifold is double-acting for controlling lengthwise movements of the front section in both senses, i.e. from front to back and from back to front. In a more preferred embodiment, said hydraulic distributer or manifold is mounted rigidly with respect to said receptacle walls and said hydraulic tubes are long enough to bridge the distance between hydraulic distributer or manifold and said hydraulic motors, at all possible positions of the front section along the length of the receptacle. Said hydraulic tubes are preferably flexible hydraulic tubes and are preferably capable of being stored in a rolled-up state on a rotatable cylinder or drum mounted either on said receptacle walls or on said front section.

In a preferred embodiment, said receptacle comprises a back section which is capable of closing off the back end of the receptacle and which is capable of being in an open or partially open position. The back section may comprise a tailgate, a liftgate, a lateral opening door, a hydraulically operated door or gate, etc.

In a preferred embodiment, said receptacle comprises two hydraulic motors , each of which is capable of delivering at least 1000 deca-Nm torque, preferably at least 1250 deca-Nm, more preferably at least 1500 deca-Nm, even more preferably at least 1750 deca-Nm, still more preferably at least 2000 deca-Nm, yet more preferably at least 2250 deca-Nm, yet even more preferably at least 2500 deca-Nm, and/or less than 4500 deca-Nm, preferably less than 4250 deca-Nm, more preferably less than 4000 deca-Nm, even more preferably less than 3750 deca-Nm, still more preferably less than 3500 deca-Nm, yet more preferably less than 3250 deca-Nm, yet even more preferably less than 3000 deca-Nm, most preferably about 2700 deca-Nm.

In a preferred embodiment, said receptacle is capable of carrying up to 2.5, 5, 7.5, 10, 15, 20, 25, 30, 40, 50, 60, 70 tons or more of solids. In a preferred embodiment, said receptacle is capable of carrying at least 1, 2.5, 5, 7.5, 10, 15, 20, 25, 30, 40, 50, 60 tons or more of solids.

In a preferred embodiment, said receptacle is up to 3, 4, 5, 6, 7, 8, 9, 10, 11, 12, 13, 14, 15 meters long or longer.

In a preferred embodiment, said front section is capable of moving between a front position near the front end of the receptacle and a back position near the back end of the receptacle. In a more preferred embodiment, said front position is located between said receptacle walls less than 2m, more preferably less than 1.5m, even more preferable less than 1m, still more preferable less than 0.9m, yet more preferable less than 0.8m, even still more preferable less than 0.7m, even yet more preferable less than 0.6m, yet still more preferable less than 0.5m from the front edges of said receptacle walls, and/or said front position is located between said receptacle walls more than 0m, more preferably more than 0.1m, more preferably more than 0.2m, more preferably more than 0.3m from the front edges of said receptacle walls, most preferably said front position is located about 0.4m from the front edges of said receptacle walls. The space between the receptacle's walls and between the frontmost position of the front section and the front edges of the receptacle walls can be used to hold or secure extra components of the receptacle, such as hydraulic motors, hydraulic tubing, a rotatable drum for the hydraulic tubing, hydraulic distributer or manifold, etc.

In a preferred embodiment said receptacle is self-supporting and preferably comprises one or more axles rotatably mounted on said receptacle walls and/or bottom part, i.e. no chassis for supporting said receptacle is attached to said receptacle. In another preferred embodiment, said receptacle comprises a, preferably light and/or low, chassis mounted on said receptacle walls and/or bottom part, said chassis preferably comprising one or more axles. Due to the possible complete or partial self-supporting of the receptacle, an extra chassis is unnecessary or can be kept light and low, hereby lowering the center of mass of the receptacle, which improves the stability of the receptacle e.g. on the road during transport, decreases the wear and tear on the tires of the receptacle or of the means for transporting the receptacle, improves the safety and the fuel efficiency during transport of the receptacle.

In a preferred embodiment, said receptacle comprises a king-pin at or near the front of the receptacle. The receptacle can be attached via its king-pin to e.g. a towing vehicle such as a tractor, to another receptacle, to a trailer, etc. In a preferred embodiment, said king-pin is suitable for being locked into a fifth-wheel coupling of a towing vehicle. A king-pin and/or a fifth-wheel coupling provide easier and more secure means of transporting the receptacle, preferably on the road.

In a preferred embodiment, said receptacle or parts of said receptacle, such as the left and/or right receptacle wall, the front section, the engagement means, the gripping means, the overhanging part of the engagement recess, comprise steel, stainless steel, such as inox, and/or Aluminium, for providing a strong, ductile, rigid, tough and relatively lightweight receptacle or receptacle's components.

In a further aspect, the present invention provides a discharge device suitable for a receptacle according to the present invention.

In yet a further aspect, the present invention provides a system comprising a receptacle according to the present invention and a towing vehicle, such as a tractor, for transporting said receptacle. Preferably said towing vehicle comprises a hydraulic actuator such as a hydraulic pump, preferably connected to an engine of said towing vehicle.

In yet a further aspect, the present invention provides a system comprising a receptacle according to the present invention and a hydraulic actuator attached to said receptacle for actuating said gripping means.

The present invention also concerns the use of a receptacle as disclosed in this text, preferably for transporting solids such as dirt, cement, concrete, rubble, chippings, construction waste and/or garbage.

The invention is further described by the following non-limiting examples which further illustrate the invention, and are not intended to, nor should they be interpreted to, limit the scope of the invention.

The present invention will be now described in more details, referring to examples that are not limitative.

### EXAM PLES

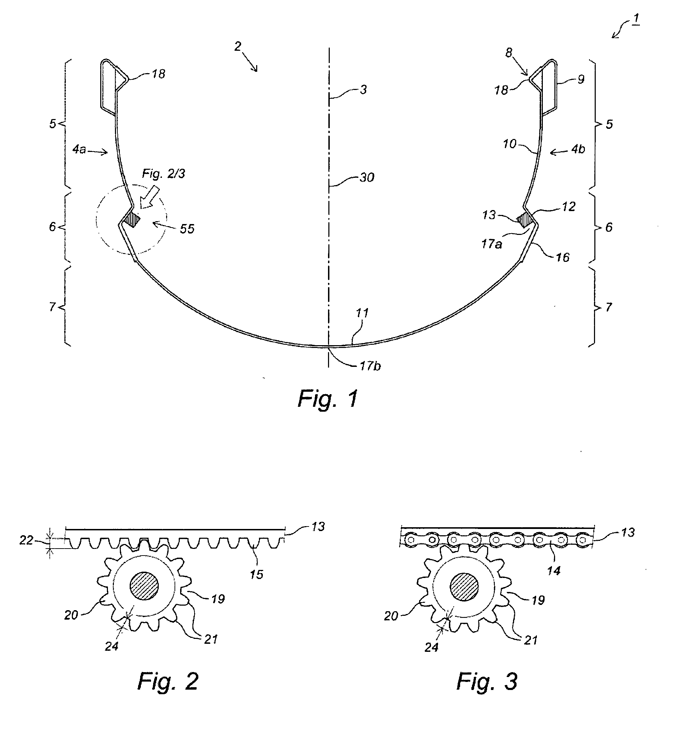

Figure 1 shows a transverse cross section of a receptacle (1) according to an embodiment of the present invention. The shown receptacle (1) has an open top (2) and is symmetrical with respect to an essentially longitudinal vertical plane (3). Each side (4a, 4b) of the receptacle comprises an upper or top part (5), a middle part (6) and a lower or bottom part (7). The upper part comprises a guiding protrusion (8) on the inner side for guiding the movable front section (25) along an essentially longitudinal direction. The upper part also comprises a top-strengthening section (9). The upper part (5) comprises a shape (10) which contributes to the self-supporting properties of the receptacle. Also the lower part (7) comprises a curved shape (11), in this example a parabolic shape, which adds to the self-supporting properties of the receptacle. The middle part (6) comprises an engagement recess with an overhanging part (12), to which engagement means (13) are attached. These engagement means (13) may be a chain (14) or a rack (15) as shown in figs. 3 and 2 respectively. The middle part (6) further comprises a middle-strengthening section (16) which in this case is straight, and which connects the overhanging part (12) with the lower part (7) of the receptacle (1). The engagement means (13) are connected to the overhanging part (12) only, and leave e.g. a gap (17) in between engagement means (13) and middle-strengthening section (16). This gap may be important since it allows remains of the transported cargo which has entered the engagement means (13), to drop down from the engagement means (13). This results in engagement means which remain clean. The engagement means (13) in fig. 1 are located at a height from the bottom of the receptacle (17a) which is about half the height of the inwardly most protruding part (18) of the guiding protrusion (8), as measured from the bottom (17) of the receptacle.

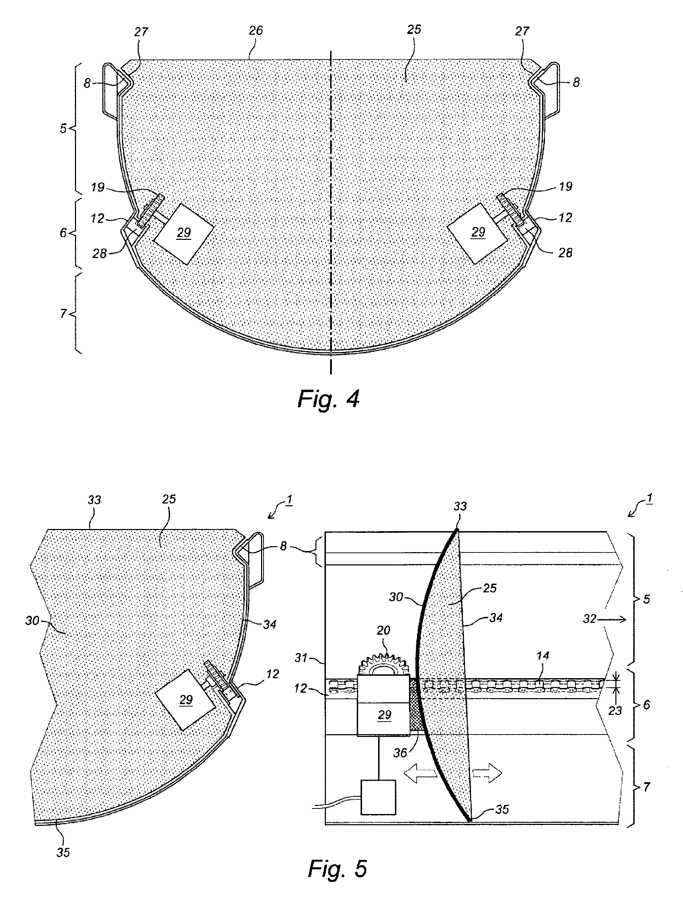

Figures 2 and 3 show two embodiments of engagement means (13) and gripping means (19). The gripping means comprise a gear (20) with teeth (21) which comprise an involute-shaped profile. The gripping means (19) grip into the engagement means (13) which can be a teethed rack (15) or a chain (14). The circular pitch of the gear (20) and the pitch of the rack (15) or chain (14) lie in the range of 130mm to 180mm. The whole depth (22) of the rack in fig. 2 corresponds to the whole depth (24) of the gear (20) and lies in range of 60mm to 180mm. The chain (14) shown in fig. 3 as an example of engagement means (13), is a roller-chain type, which is rigidly attached to the overhanging part (12) of the receptacle. The width (23) of the chain (14), see fig. 5, lies in the range 60mm to 180mm and corresponds to the whole depth (24) of the gear (20).

Figure 4 shows a frontal view of the movable front section of a receptacle according to the present invention. The front section (25) comprises a shape which fits in the cross-sectional shape of the receptacle (1), as was also shown in fig. 1. The space between the front section (25) and the side of the receptacle lies in the range of 1mm to 20mm, preferably about 10mm. Seen from the front, the front section (25) comprises an essentially straight top side (26) and at least partially curved left, right and bottom sides. The left and right side have a guiding recess (27) at the corresponding position of the guiding protrusions (8) and an engagement recess (28) at the position of the engagement means (13). Two gripping means (19) are placed at the left and right side of the front section (25), and are capable of gripping into the engagement means (13) at the positions of the recesses (28). The gripping means (19) are actuated via a hydraulic motor (29) connected to a hydraulic actuator, which can e.g. be mounted on the tractor unit and connected to the hydraulic motors (29) via a set of tubes. These tubes are long enough to allow the front section (25) to be pushed completely to the end of the receptacle (1) whereby the hydraulic motors (29) remain connected to the hydraulic actuator. Alternatively, at least one hydraulic actuator may be mounted on the front section (25). Such actuator may be fed electrically e.g. via a power cable connected to a power source, preferably mounted on the tractor unit.

Figure 5 shows a frontal view and a longitudinal cross-sectional view of the front section and the receptacle according to an embodiment of the present invention. The guiding protrusion (8) in the upper part (5) of the receptacle (1) is capable of guiding and supporting the front section (25) along the length of the receptacle. The front section (25) comprises a curved shape as seen in the longitudinal cross-sectional view. This curved shaped bulges towards the front (31) at the center (30) of the front section (25) and the top (33), side (34) and bottom (35) edges of the front section (25) are directed more towards the back (32) of the receptacle than the center (30) of the front section. This curved shape ensures that cargo is more easily pushed towards the back without losses at the bottom or the top. At the bottom edge (35), the shape is such that the front section (25) acts as a shovel, hereby scraping or nearly scraping the cargo from the bottom of the receptacle. At the top edge (33), the front section (25) hangs over cargo, such that if cargo, e.g. dirt or ground, is piled up against the front section (25) when it is being pushed backwards, it tends to fall back into the receptacle and does not get spilled over the top edge (33) of the front section (25). The side edges (34) are curved towards the back (32) of the receptacle with respect to the center (30) of the front section (25) in order to distribute better the forces acting on the front section when it is pushing cargo to the back (32) of the receptacle (1). These forces are two-fold. Firstly, by pushing the cargo to the back, the cargo exerts a force on the front section which is, on average, evenly distributed along the width of the front section and directed towards the front (31). Secondly, the gripping means exert forces directed towards to back (32) on the left and right side of the front section where the gripping means (19) or hydraulic motors (29) are mounted (36) on the front section (25). The curved shape of the front section along the width can be optimized to reduce as much as possible shear stresses in the material, e.g. steel, of which the front section is made. The shape of the front section along the width may be described by a parabola, a hyperbolic cosine, a circle arch, or a similarly curved function. The gear (20) grips into the chain (14) which is rigidly mounted lengthwise on the overhanging part (12) of the middle part (6) of the receptacle. The gear (20) is controlled by the hydraulic motor (29) which is mounted (36) on the front section (25).

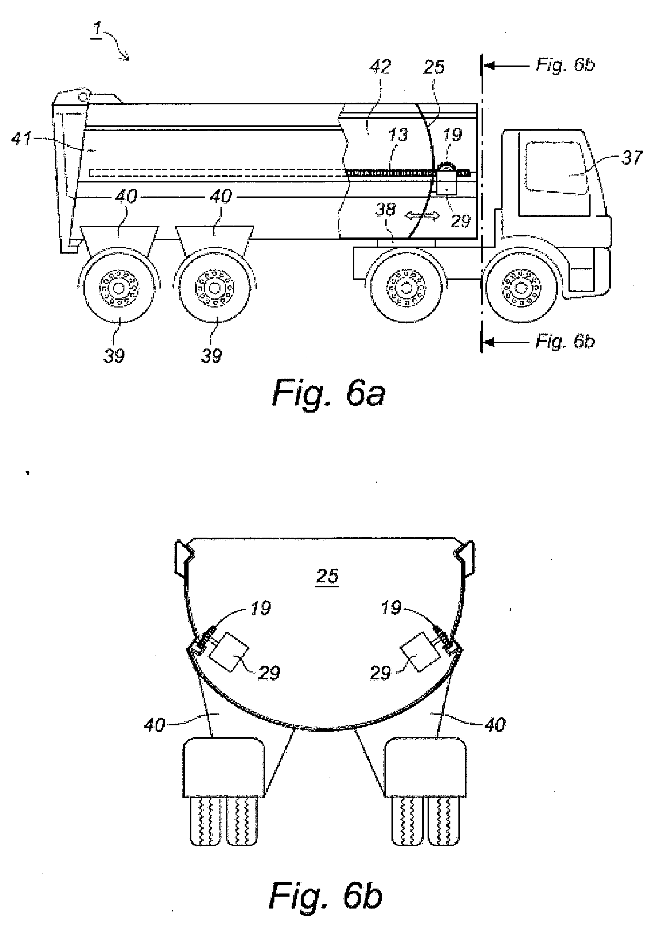

Figures 6a and 6b show a self-supporting receptacle comprising a set of axles and wheels and connected to a towing vehicle. The towing vehicle (37) can be a tractor comprising a fifth-wheel coupling (38) which is coupled to a king-pin of the receptacle (1). The receptacle may comprise 1, 2, 3, 4 or more axles. In this case, the receptacle comprises two axles (39) with wheels, which are mounted directly (40) onto the outer side of the receptacle's walls (41), i.e. the receptacle does not comprise a chassis mounted between the axles and the receptacle's walls. Engagement means (13) are mounted on the inner side of the receptacle's walls (42). Gripping means (19) comprising a hydraulic motor (29) are mounted on the outer side of the front section (25).

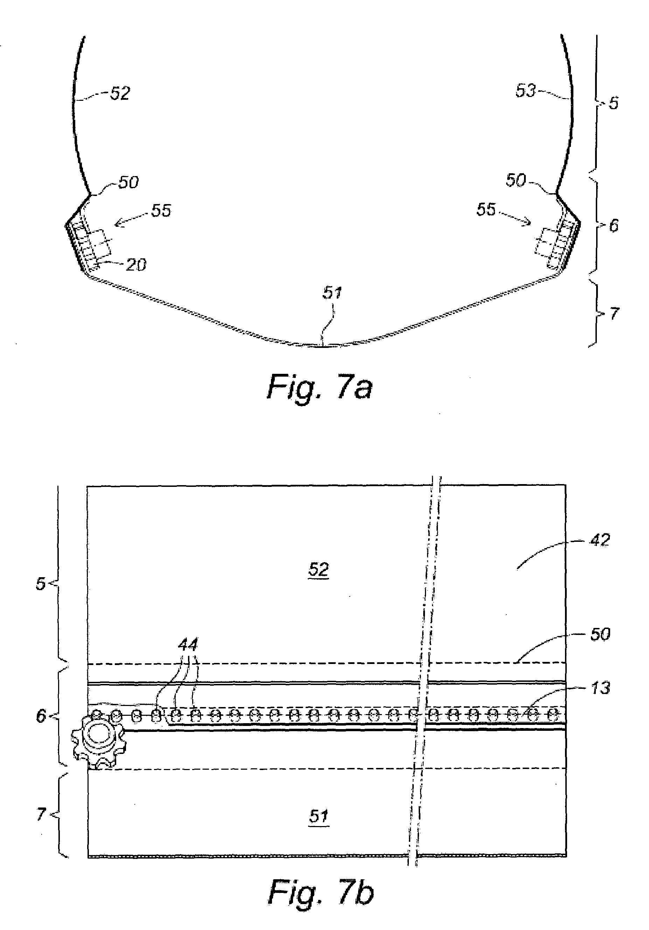

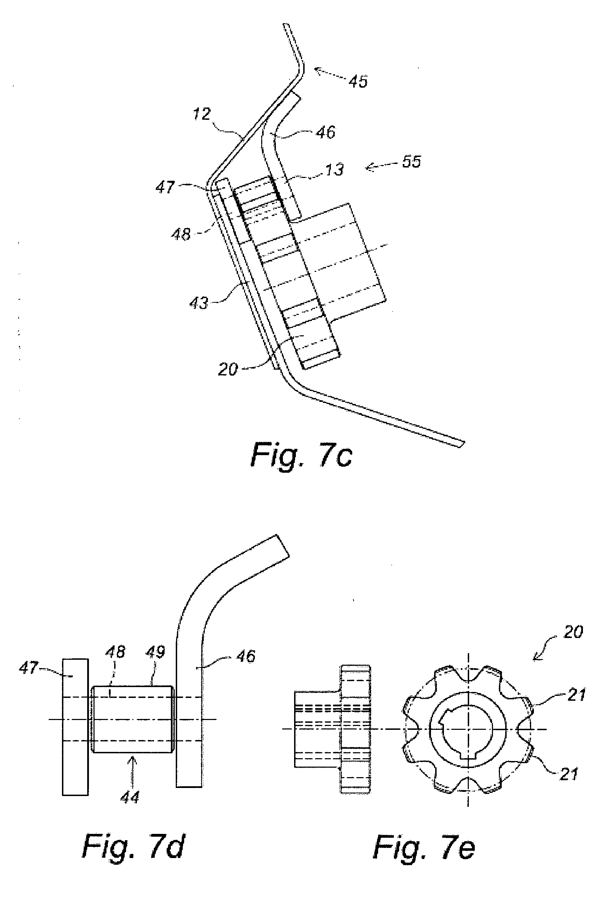

Figures 7a-7e illustrate an embodiment of a receptacle according to the present invention. Figure 7a shows a front view, fig. 7b shows a cross-sectional side view as indicated in fig. 7a, fig. 7c shows the engagement means, an engagement protrusion (45, 50) above an engagement recess (55) and the gear of the gripping means in more detail, fig. 7d shows the rollers of the engagement means in more detail and fig. 6e shows the gear of the gripping means in more detail. Shown are the top (5), middle (6) and bottom (7) part of the receptacle's walls, engagement means (13) which are attached to the overhanging part (12) and to a slanted part (43) in the middle part (6) below the overhanging part (12), said engagement means comprising a set of rollers (44) and a gear (20) of the gripping means. The receptacle's bottom and walls comprise a longitudinally extending profiled steel plate (51) which spans the receptacle's bottom part and two longitudinally extending profiled steel plates (52, 53) which span the top parts of the left and right receptacle walls. The bottom and wall plates overlap in the middle part (6) of the receptacle where they can be attached, e.g. welded and/or bolted. The wall plates comprise an engagement protrusion (50) and an engagement recess (55) for protecting the engagement means (13) attached below this protrusion (50). The overhanging part (12) is slanted, i.e. is not completely horizontal, and makes an angle of about 45° with the horizontal direction. It is about 16cm wide. The gear (20) grips with its teeth (21) between the rollers (44), slanted from below. The rollers each comprise an inner cylinder (48) which can be rigidly fixed to the middle part (6) by a set of profiled flanges or plates (46) which can be bolted to the overhanging part (12) of the receptacle's wall, and by a longitudinally extending plate (47) which is bolted along the length of the receptacle. Alternatively, this plate (47) can be replaced by a set of smaller plates and/or the set of profiled flanges (46) may be replaced by a longitudinally extending flage which is bolted along the length of the receptacle to the overhanging part (12). The rollers (44) further each comprise a hollow drum (49) which is about 5cm high and which is rotatably mounted around the inner cylinder (48).

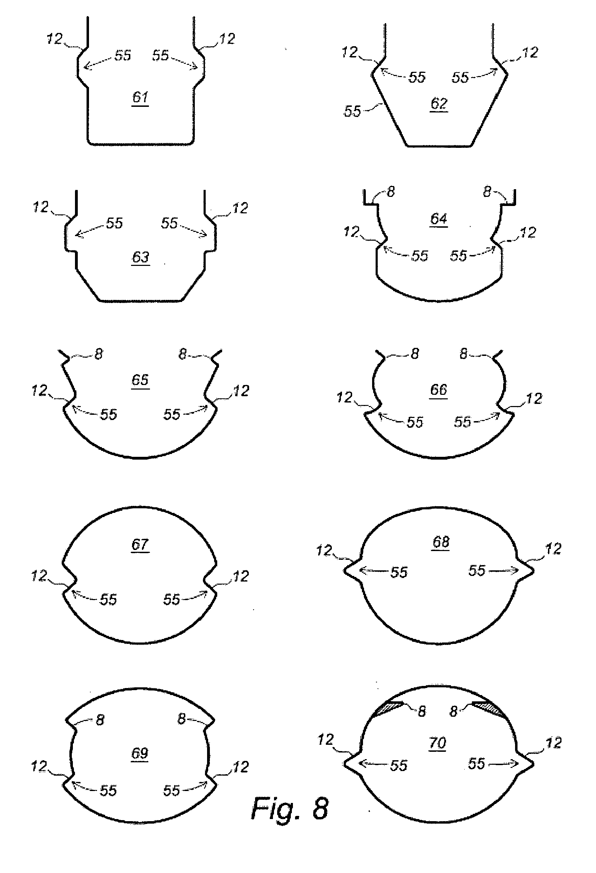

Figure 8 shows cross sectional views of a number of embodiments of a receptacle according to the present invention. The illustrated cross sections (61-66) show engagement recesses (55) with overhanging parts (12) in the middle parts of the left and right container walls. The receptacle's walls and bottom may comprise straight sections (61, 62, 63, 65), curved section (66) or a combination of straight and curved sections (64). Cross sections (64, 65, 66) also show guiding protrusions (8) for guiding and supporting the front section along the longitudinal direction. The present invention may also refer to closed receptacles or partly closed receptacles. Examples of cross sections (67, 68, 69, 70) of closed or partially closed receptacles are shown in fig. 8. Sealable holes in the top of the receptacle (not shown in the cross sectional views of fig. 8) may provide access to the cargo space of the receptacle. Each of the closed receptacles illustrated in fig. 8 shows engagement recesses (55) with overhanging parts (12), and cross sections (69, 70) also illustrate guiding protrusions (8). It should be clear that closed receptacles can also be obtained by covering the receptacles with cross sections (61-66) either temporarily, e.g. by a textile, or essentially permanently, e.g. by one or more covering plates bolted or welded to the receptacle's walls.

It is supposed that the present invention is not restricted to any form of realization described previously and that some modifications can be added to the presented example of fabrication without reappraisal of the appended claims. For example, the present invention has been described referring to a receptacle which is capable of unloading its cargo by pushing the front section towards the back, but it is clear that the invention can be applied for instance to a receptacle unloading its cargo by pushing the back section towards the front.

## Claims

1. A receptacle (1) for storing and transporting solids, comprising a left receptacle wall, a right receptacle wall and a movable front section (25), all three of which comprise a top part (5), a middle part (6) and a bottom part (7), said receptacle (1) comprising a discharge device for unloading said solids by pushing out the solids through a back end (32) of said receptacle (1), thereby increasing operator's and bystander's safety and/or reducing the receptacle's tare weight, whereby said discharge device comprises at least one engagement means (13), at least one gripping means (19) and at least one actuating system, whereby said engagement means (13) are mounted lengthwise along said left and/or right receptacle wall inside said receptacle (1), whereby said gripping means (19) are mounted on an outer side of said front section (25) and grip into said engagement means (13), whereby said actuating system is connected to said gripping means (19) and capable of actuating said gripping means (19), thereby moving said front section (25) lengthwise along the receptacle (1), whereby said middle part (6) of said receptacle walls comprises a lengthwise engagement recess (55) comprising an overhanging part (12), said engagement means (13) attached to the middle part (6) of said left and/or right receptacle wall to or below said overhanging part (12) of said engagement recess (55), **characterized in that** said engagement means (13) are rigidly attached to said slanted overhanging part (12) or to a slanted middle section below said overhanging part (12), whereby the gripping means are mounted on the front section in a slanted direction.

2. A receptacle according to claim 1, whereby said discharge device comprises at least two engagement means (13) and two gripping means (19), whereby at least one left engagement means (13) is mounted lengthwise along said left receptacle wall inside said receptacle (1) and at least one right engagement means (13) is mounted lengthwise along said right receptacle wall inside said receptacle (1), whereby at least one gripping means (19) grips into said left engagement means (13) and at least one gripping means (19) grips into said right engagement means (13)

3. A receptacle according to any of the claims 1 or 2, whereby said receptacle (1) is self-supporting.

4. A receptacle according to any of the claims 1 to 3, whereby the bottom part (7) of said receptacle (1) comprises a cross section which comprises a, preferably hollow, curved shape, such as a parabola, a circle arc, a hyperbolic cosine or similar, for strengthening the receptacle (1) and/or for increasing the self-supporting properties of said receptacle (1).

5. A receptacle according to any of the claims 1 to 4, whereby said receptacle (1) comprises at least two guiding protrusions (8) and/or recesses (27), whereby the left and the right receptacle wall each comprise at least one guiding protrusion (8) and/or recess (27).

6. A receptacle according to any of the claims 1 to 5, whereby said gripping means (19) comprise a gear or pinion (20), preferably the teeth (21) of said gear (20) comprise an involute or cycloid profile.

7. A receptacle according to any of the claims 1 to6, whereby said engagement means (13) comprise a set of cylinders (48) and/or drums (49), comprising an essentially circular cross section and a, preferably straight, mantle surface, which are attached to the overhanging part (12) of said engagement recess (55) or to said slanted or vertical middle section, said cylinders (48) or drums (49) attached in a regular, lengthwise lined-up pattern along said receptacle (1).

8. A receptacle according to any of the claims 1 to7, whereby said front section (25) comprises a curved shape for more efficiently unloading the cargo.

9. A receptacle according to any of the claims 1 to 8, whereby said front section (25) comprises closing means, such as strips, preferably rubber or elastic strips, attached to the edges (34, 35) of the front section (25) for closing a slit between the front section (25) and the left and/or right receptacle walls and/or bottom (7) and/or top part (5) of said receptacle (1).

10. A receptacle according to any of the claims 1 to9, whereby said receptacle (1) comprises one or more hydraulic motors (29) attached to said front section (25) and operably attached to said gripping means (19) for actuating said gripping means (19), thereby capable of moving said front section (25) in a lengthwise direction.

11. A receptacle according to any of the claims 1 to 10, whereby said receptacle (1) comprises two gripping means (19), whereby one gripping means (19) grips into engagement means (13) attached to the middle part (6) of the left receptacle wall and one gripping means (19) grips into engagement means (13) attached to the middle part (6) of the right receptacle wall, and whereby said receptacle (1) comprises two hydraulic motors (29) which are mounted on said front section (25) and whereby each of said hydraulic motors (29) is operably connected to a gripping means (19).

12. A discharge device suitable for a receptacle (1) according to any of the claims 1 to 11.

13. A system comprising a receptacle (1) according to any of the claims 1 to 11 and a towing vehicle (37) for transporting said receptacle (1), said towing vehicle (37) comprising a hydraulic actuator connected to an engine of said towing vehicle (37).

14. A system comprising a receptacle (1) according to any of the claims 1 to 11 and a hydraulic actuator attached to said receptacle (1) for actuating said gripping means (19).

## Patentansprüche

1. Ein Behälter (1) zum Speichern und Transportieren von Feststoffen, umfassend einer linken Behälterwand, einer rechten Behälterwand und einem beweglichen Vorderteil (25), alle drei ein Oberteil (5), einen Mittelteil (6) und ein Unterteil (7) umfassend, genannter Behälter (1) umfassend eine Entladungseinrichtung zum Entladen der genannten Feststoffe durch das Hinausschieben der Feststoffe durch ein hinteres Ende (32) des genannten Behälters (1), wobei die Sicherheit des Bedieners und des Zuschauers zunehmt und/oder das Taragewicht des Behälters verringert, wobei die genannte Entladungseinrichtung zumindest ein Eingriffsmittel (13), zumindest ein Greifmittel (19) und zumindest ein Betätigungssystem umfasst, wobei die genannte Eingriffsmittel (13) in Längsrichtung entlang der genannten linken und/oder rechten Behälterwände innerhalb des genannten Behälters (1) montiert sind, wobei die genannte Greifmittel (19) auf einer Außenseite des genannten Vorderteils (25) montiert sind und in die genannte Eingriffsmittel (13) eingreifen, wobei das genannte Betätigungssystem auf den genannten Greifmittel (19) angeschlossen ist und fähig ist die genannte Greifmittel (19) zu betätigen, wodurch das genannte Vorderteil (25) in Längsrichtung entlang des Behälters (1) bewegt, wobei der genannte Mittelteil (6) der genannten Behälterwände eine Längseingriffsaussparung (55) umfasst, die einen überhängenden Teil (12) umfasst, diese Eingriffsmittel (13) sind an dem Mittelteil (6) der genannten linken und/oder rechten Behälterwand verbunden an oder unter dem überhängenden Teil (12) der genannten Eingriffsaussparung (55), **dadurch gekennzeichnet, dass** die genannte Eingriffsmittel (13) starr an dem genannten schrägen überhängenden Teil (12) oder an einem schrägen Mittelteil unterhalb des überhängenden Teils (12) verbunden sind, wobei die Greifmittel auf dem Vorderteil in einer schrägen Richtung montiert sind.

2. Ein Behälter nach Anspruch 1, wobei die genannte Entladungseinrichtung zumindest zwei Eingriffsmittel (13) und zwei Greifmittel (19) umfasst, wobei zumindest ein linkes Eingriffsmittel (13) in Längsrichtung entlang der linken Behälterwand innerhalb des genannten Behälters (1) montiert ist, und zumindest ein rechtes Eingriffsmittel (13) in Längsrichtung entlang der rechten Behälterwand innerhalb des Behälters (1) montiert ist, wobei zumindest ein Greifmittel (19) in das genannte linke Eingriffsmittel (13) eingreift und zumindest ein Greifmittel (19) in das genannte rechte Eingriffsmittel (13) eingreift.

3. Ein Behälter nach einem der Ansprüche 1 oder 2, wobei der genannte Behälter (1) selbsttragend ist.

4. Ein Behälter nach einem der Ansprüche 1 bis 3, wobei das Unterteil (7) des genannten Behälters (1) einen Querschnitt umfasst, der eine, vorzugsweise hohle, gebogene Form, wie beispielsweise eine Parabel, einen Kreisbogen, einen Hyperbelkosinus oder ähnliche umfasst, zur Stärkung des Behälters (1) und/oder zur Erhöhung der selbsttragenden Eigenschaften des genannten Behälters (1).

5. Ein Behälter nach einem der Ansprüche 1 bis 4, wobei der Behälter (1) mindestens zwei Führungsvorsprünge (8) und/oder Aussparungen (27) umfasst, wobei jede linke und rechte Behälterwand zumindest eine Führungsvorsprung (8) und/oder eine Aussparung (27) umfasst.

6. Ein Behälter nach einem der Ansprüche 1 bis 5, wobei die genannte Greifmittel (19) ein Zahnrad oder Ritzel (20) umfassen, vorzugsweise umfassen die Zähne (21) des genannten Zahnrads (20) ein Evolventen- oder Zykloidenprofil.

7. Ein Behälter nach einem der Ansprüche 1 bis 6, wobei die genannte Eingriffsmittel (13) ein Set von Zylindern (48) und/oder Trommeln (49) umfasst, umfassend einen im Wesentlichen kreisförmigen Querschnitt und eine, vorzugsweise gerade, Mantelfläche, die an dem überhängenden Teil (12) der genannten Eingriffsaussparung (55) oder an dem genannten schrägen oder vertikalen Mittelteil befestigt sind, die genannte Zylinder (48) bzw. Trommeln (49) sind in einem regelmäßigen, längs liniierten Muster entlang des genannten Behälters (1) befestigt.

8. Ein Behälter nach einem der Ansprüche 1 bis 7, wobei das genannte Vorderteil (25) eine gebogene Form zum effizienteren Entladen der Fracht umfasst.

9. Ein Behälter nach einem der Ansprüche 1 bis 8, wobei das genannte Vorderteil (25) Verschließmittel umfasst, wie beispielsweise Streifen, vorzugsweise Gummi- oder elastische Streifen, an den Rändern (34, 35) des Vorderteils (25) befestigt zum Schließen eines Spaltes zwischen dem Vorderteil (25) und den linken und/oder rechten Behälterwänden und/oder Unterteil (7) und/oder Oberteil (5) des genannten Behälters (1).

10. Ein Behälter nach einem der Ansprüche 1 bis 9, wobei der genannte Behälter (1) einen oder mehrere hydraulische Motoren (29) umfasst, an dem genannten Vorderteil (25) verbunden und funktionell an den genannten Greifmittel (19) befestigt zum Betätigen der genannten Greifmittel (19), die damit fähig sind das genannte Vorderteil (25) in einer Längsrichtung zu bewegen.

11. Ein Behälter nach einem der Ansprüche 1 bis 10, wobei der Behälter (1) zwei Greifmittel (19) umfasst, wobei ein Greifmittel (19) in die genannte Eingriffsmittel (13) befestigt an dem Mittelteil (6) der linken Behälterwand eingreift und ein Greifmittel (19) in die Eingriffsmittel (13) befestigt an dem Mittelteil (6) der rechten Behälterwand eingreift, und wobei der genannte Behälter (1) zwei hydraulische Motoren (29) umfasst, die auf dem genannten Vorderteil (25) montiert sind und wobei jeder der genannten hydraulischen Motoren (29) funktionell mit einem Greifmittel (19) verbunden ist.

12. Eine Entladungseinrichtung geeignet für einen Behälter (1) nach einem der Ansprüche 1 bis 11.

13. Ein System, umfassend einen Behälter (1) nach einem der Ansprüche 1 bis 11 und einen Schlepper (37) zum Transport des genannten Behälters (1), der genannte Schlepper (37) umfassend einen hydraulischen Antrieb, der mit einem Motor des genannten Schleppers (37) verbunden ist.

14. Ein System, umfassend einen Behälter (1) nach einem der Ansprüche 1 bis 11 und einen hydraulischen Antrieb an dem genannten Behälter (1) befestigt zum Betätigen der genannten Greifmittel (19).

## Revendications

1. Un récipient (1) pour le stockage et le transport de solides, comprenant une paroi de récipient gauche, une paroi de récipient droite et une section avant mobile (25), tous les trois comprennent une partie supérieure (5), une partie médiane (6) et une partie inférieure (7), ledit récipient (1) comprenant un dispositif de décharge pour décharger lesdits solides en repoussant les solides à travers une extrémité arrière (32) dudit récipient (1), augmentant ainsi la sécurité de l'utilisateur et d'autres personnes présentes et/ou réduisant le poids de tare du récipient, dans lequel ledit dispositif de décharge comprend au moins un moyen d'engagement (13), au moins un moyen de saisie (19) et au moins un système d'actionnement, dans lequel lesdits moyens d'engagement (13) sont montés longitudinalement le long de ladite paroi gauche et/ou droite à l'intérieure dudit récipient (1), dans lequel lesdits moyens de saisie (19) sont montés sur un côté extérieur de ladite section avant (25) et saisissent dans lesdits moyens d'engagement (13), dans lequel ledit système d'actionnement est connecté auxdits moyens de saisie (19) et capable d'actionner lesdits moyens de saisie (19), déplaçant ainsi ladite section avant (25) longitudinalement le long du récipient (1), dans lequel ladite partie médiane (6) desdites parois de récipient comprend un évidement moyen d'engagement longitudinal (55) comprenant une partie en surplomb (12), lesdits moyens d'engagement (13) fixé à la partie médiane (6) de ladite paroi gauche et/ou droite à ou au-dessous de ladite partie en surplomb (12) dudit évidement d'engagement (55), **caractérisé en ce que** lesdits moyens d'engagement (13) sont fixés rigidement à ladite partie en surplomb inclinée (12) ou à une section médiane inclinée au-dessous de ladite partie en surplomb (12), dans lequel les moyens de saisie sont montés sur la section avant dans une direction inclinée.

2. Un récipient selon la revendication 1, dans lequel ledit dispositif de décharge comprend au moins deux moyens d' engagement (13) et deux moyens de saisie (19), dans lequel au moins un moyen d'engagement gauche (13) est monté longitudinalement le long de ladite paroi de récipient gauche à l'intérieur dudit récipient (1) et au moins un moyen d'engagement droit (13) est monté longitudinalement le long de ladite paroi de récipient droite à l'intérieur dudit récipient (1), dans lequel au moins un moyen de saisie (19) saisit dans ledit moyen d'engagement gauche (13) et au moins un moyen de saisie (19) saisit dans ledit moyen d'engagement droit (13).

3. Un récipient selon l'une quelconque des revendications 1 ou 2, dans lequel ledit récipient (1) est autoportant.

4. Un récipient selon l'une quelconque des revendications 1 à 3, dans lequel la partie inférieure (7) dudit récipient (1) comprend une section transversale qui comprend une forme incurvée, de préférence creuse, par exemple une parabole, un arc de cercle, une hyperbole cosinus ou similaire, pour renforcer le récipient (1) et/ou pour augmenter les propriétés autoportantes dudit récipient (1).

5. Un récipient selon l'une quelconque des revendications 1 à 4, dans lequel ledit récipient (1) comprend au moins deux saillies (8) et/ou des évidements (27) de guidage, dans lequel la paroi de récipient gauche et droite comprennent chacune au moins une saillie (8) et/ou un évidement (27) de guidage.

6. Un récipient selon l'une quelconque des revendications 1 à 5, dans lequel lesdits moyens de saisie (19) comprennent un engrenage ou pignon (20), de préférence, les dents (21) dudit engrenage (20) comprennent un profil en courbe développante ou un profil cycloïde.

7. Un récipient selon l'une quelconque des revendications 1 à 6, dans lequel lesdits moyens d'engagement (13) comprennent un ensemble de cylindres (48) et/ou tambours (49), comprenant une section transversale essentiellement circulaire et une, de préférence rectiligne, surface de manteau, qui sont fixés à la partie en surplomb (12) dudit évidement d'engagement (55) ou à ladite section médiane inclinée ou verticale, lesdits cylindres (48) ou tambours (49) fixés dans un motif régulier, longitudinalement aligné le long dudit récipient (1).

8. Un récipient selon l'une quelconque des revendications 1 à 7, dans lequel ladite section avant (25) comprend une forme incurvée pour décharger la cargaison de manière plus efficace.

9. Un récipient selon l'une quelconque des revendications 1 à 8, dans lequel ladite section avant (25) comprend des moyens de fermeture, tels que des bandes, de préférence des bandes en caoutchouc ou élastiques, fixés aux bords (34, 35) de la section avant (25) pour fermer une fente entre la section avant (25) et les parois de récipient gauches et/ou droites et/ou la partie inférieure (7) et/ou la partie supérieure (5) dudit récipient (1).

10. Un récipient selon l'une quelconque des revendications 1 à 9, dans lequel ledit récipient (1) comprend un ou plusieurs moteurs hydrauliques (29) fixés à ladite section avant (25) et fixés de manière opérationnelle auxdits moyens de saisie (19) pour actionner lesdits moyens de saisie (19), ainsi capable de déplacer ladite section avant (25) dans une direction longitudinale.

11. Un récipient selon l'une quelconque des revendications 1 à 10, dans lequel ledit récipient (1) comprend deux moyens de saisie (19), dans lequel un moyen de saisie (19) saisit dans le moyen d'engagement (13) fixés à la partie médiane (6) de la paroi de récipient gauche et un moyen de saisie (19) saisit dans le moyen d'engagement (13) fixé à la partie médiane (6) de la paroi de récipient droite, et dans lequel ledit récipient (1) comprend deux moteurs hydrauliques (29) qui sont montés sur ladite section avant (25) et dans lequel chacun desdits moteurs hydrauliques (29) est joint de manière opérationnelle à un moyen de saisie (19).

12. Un dispositif de décharge approprié pour un récipient (1) selon l'une quelconque des revendications 1 à 11.

13. Un système comprenant un récipient (1) selon l'une quelconque des revendications 1 à 11 et un véhicule de remorquage (37) pour transporter ledit récipient (1), ledit véhicule de remorquage (37) comprenant un actionneur hydraulique joint à un moteur dudit véhicule de remorquage (37).

14. Un système comprenant un récipient (1) selon l'une quelconque des revendications 1 à 11 et un actionneur hydraulique fixé audit récipient (1) pour actionner lesdits moyens de saisie (19).
